# EUROPEAN PATENT APPLICATION

(11) **EP 0 884 079 A1**
(43) Date of publication of application: **16.12.1998**
(21) Application number: 97830286.7
(22) Date of filing: 12.06.1997
(51) Int. Cl.: B01D 1/00, B01D 29/11

(54) **Selfcleaning filter**

(71) Applicant: Tecsi S.r.l., 21052 Busto Arsizio (Varese) (IT)
(72) Inventor: Lodesani, Ruggero, 20052 Monza (Milano) (IT); Gusmini, Silvio, 24047 Treviglio (Bergamo) (IT)
(74) Representative: Sutto, Luca

(57) **Abstract**

A self-cleaning filter (1) is provided which comprises a tubular filtering element (2), a scraping element (10) of helical conformation disposed within the filtering element, and movement means (11) adapted to set the scraping element in rotation.

## Description

The present invention relates to a self-cleaning filter.

It is known that in some industrial processes, in the textile and paper fields for example, solid particles suspended in the fluids submitted to filtration can reach very important amounts for each square metre of said fluids, thereby giving rise to a progressive clogging over the whole surface of the filtering elements, which will force users to carry out frequent discharge and washing operations to the detriment of an inexpensive production.

A known technical solution for restricting areas subjected to said clogging and reduce discharge and washing frequency consists in increasing the filter element surface so as to enable a constant flowing even when a 30-40% clogging occurs.

However, this solution has the serious drawback that installation of oversize filters relative to the actual process requirements is needed and therefore economically unbearable costs are involved.

Therefore, generally use of filters of the self-cleaning type is preferred. Said filters are provided with devices capable of periodically carrying out an at least partial removal of deposits. In more detail, self-cleaning filters have devices which are active on the inner surface of the filtering elements in which, if filters providing flowing from inside to outside are involved, the amount of the material that can be accumulated is the greatest, so that a serious clogging may occur.

There is a great variety of known techniques for carrying out self-cleaning filters.

A first known technique is based on the use of scraping blades mounted on the rotating shaft disposed internally of the filtering element and resting on the inner cylindrical surface of said filtering element. Although this technique is efficient in a great number of applications, it has proved to be inappropriate in particular installations and above all when suspended solids of the filamentary or thread-like type are concerned, which happens in weaving for example. Actually, deposits of the filamentary nature are hardly removed and partly remain on the inner surface of the filtering element thereby creating agglomerated masses that, by progressively closing the passage area, give rise to an irreversible increase in the loss of head through the filter.

In addition, filamentary deposits tend to get entangled on the rotating blade-carrier shaft, thereby giving rise to further problems in terms of loss of efficiency of the filter.

Other alternative solutions of known type, based either on counter-rotation of the filtering element relative to the scraping blades for example, or on addition of sucking ducts terminating at the scraping blades, give rise to a greater construction complexity of the plant and higher installation and operating costs, while on the other hand are unable to improve removal of filamentary solid deposits from the filtering element to an important extent and to eliminate storing of said deposits on the supporting portions of the blades.

Also provided are rotating blades consisting of steel wires, but although said blades increase the cleaning effect in that wires achieve a deep penetration into the filtering element slits, which effect is impossible with blades having a continuous profile, they do not avoid suspended solids being retained in said wires which in the progress of time will give rise to accumulations that will decrease both efficiency of the cleaning action and the free passage areas in the filtering elements.

If dismantling of these steel wire blades and strong washing of same is not periodically carried out, blades themselves are converted into material blocks the their cleaning effect becomes almost null, which in addition will bring about possible damages for overloading to the support shaft and each blade.

Another known technique is based on the use of suitably bored pistons to enable dipping into the fluid, which pistons are driven with a reciprocating motion internally of the filtering element and are peripherally provided with rings made of rubber or other material and slidable against the inner surface of the filtering element itself.

This known technique, also due to the low translation speed of the piston, can give rise to deposit of filamentary solids on the shaft and the solid surface of the piston thereby involving a continuous storage of material that can cause slowing in the active piston stroke and even a complete stopping of said piston. In addition, piston may cause worsening in the cleanness condition of the filtering element if deposits, instead of being removed, are pressed against the outer surface of the filtering element where they form a coating layer, thereby increasing difficulty in removal.

Improvement in the cleaning efficiency of the piston may be achieved by driving the latter in rotation during its translational motion by means of a nut screw coupling.

However, this technical solution does not avoid deposits on the piston and requires great accuracy in couplings in addition to appropriate protection of the nut screw dipped in the liquid, which will greatly increase construction costs.

Practically the above described known techniques for obtaining good efficiency and efficacy features in the filtering action require either periodical dismantling and washing steps or replacement of the cleaning elements and filtering elements.

Under this situation, the technical task underlying the present invention is to devise a self-cleaning filter capable of substantially obviating the above drawbacks.

Within the scope of this technical task, it is an important object of the invention to devise a self-cleaning filter enabling great efficiency and efficacy features constant in time to be maintained in the filtering element provided therein, even in the presence of filamentary solids suspended in the fluids to be filtered.

Another important object of the invention is to devise a self-cleaning filter of simple construction, reduced production costs and easy assembling.

The technical task mentioned and the objects specified are substantially achieved by a self-cleaning filter as described in the appended claims.

Description of a preferred but non-exclusive embodiment of a self-cleaning filter in accordance with the invention is now given hereinafter, with reference to the accompanying drawings, in which:

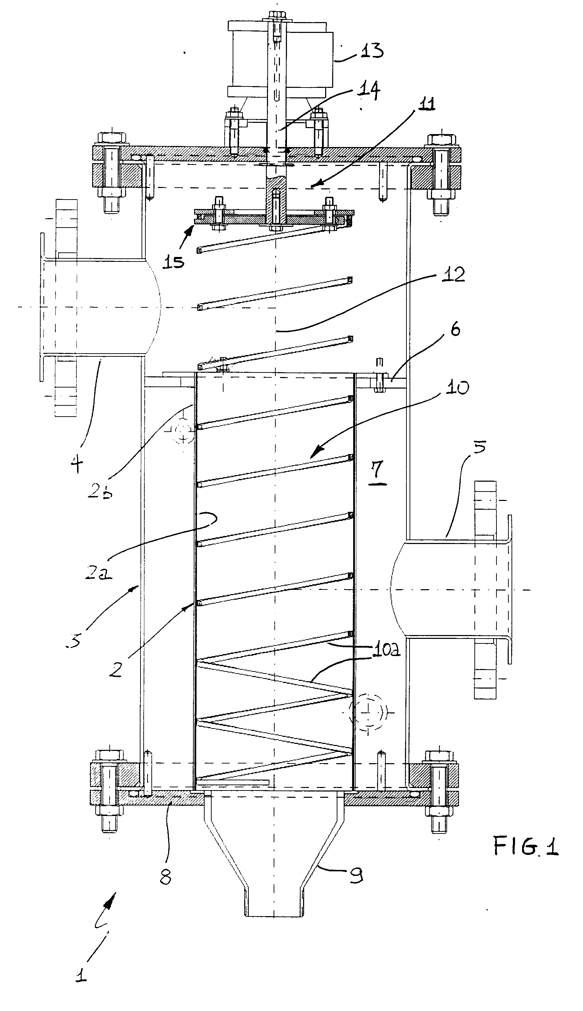

- Fig. 1 is a longitudinal sectional view of a self-cleaning filter in accordance with the invention;

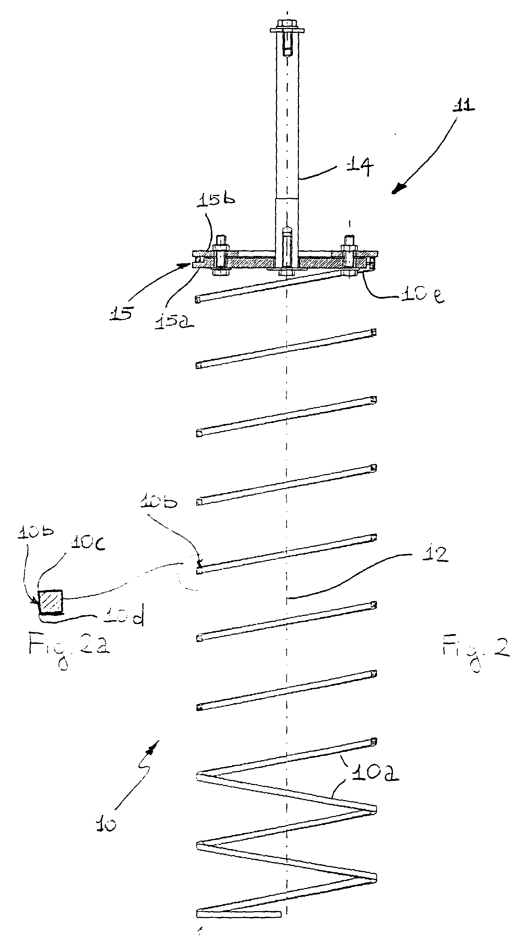

- Fig. 2 shows the cleaning device included in the self-cleaning filter seen in Fig. 1; and
- Fig. 2a shows a detail of Fig. 2 to an enlarged scale.

With reference to the drawings, the self-cleaning filter in accordance with the invention is generally identified by reference numeral 1.

It comprises a filtering element 2, of tubular form, having a main filtering surface 2a, herein the inner one, typically of cylindrical conformation, although it is not limited to this shape. The filtering element 2 is set internally of a cylindrical casing 3 provided with an inlet opening 4 disposed uppermost and an outlet opening 5 disposed lowermost. In addition, under the inlet opening 4, an inner partition 6 is provided which is centrally pierced with a hole and with which an upper end 2a of the filtering element 2 is engaged so that the liquid to be submitted to filtration may flow from the inside to the outside of the filtering element itself 2 into a hollow space 7 interposed between said filtering element and casing 3.

Clearly, by carrying out obvious modifications, the liquid flow from the inlet opening 4 may be provided to move radially from the outside to the inside. In the last-mentioned case, the main surface 2a of the filtering element will be the radially outer one.

The filtering element 2 at the lower portion thereof rests on a bottom 8 of casing 3 and opens into a discharge duct 9 for evacuation of the removed deposits which is provided with an appropriate discharge valve (not shown in the figures) to be driven to its open and closed positions following predetermined time intervals or when predetermined pressure differences between the inlet opening 4 and outlet opening 5 are reached.

The self-cleaning filter 1 further comprises a device for cleaning the filtering element 2 consisting of a scraping element 10 having, in an original manner, a helical conformation, and of movement means 11 adapted to set the scraping element 10 in rotation about its central axis 12 substantially coincident with the longitudinal extension axis of the main surface 2a.

More specifically, the scraping element 10 is defined by a bar of spring material, preferably spring stainless steel conveniently wound into helical turns 10a of a shape matching that of the main surface 2a and having a scraping edge 10b disposed in contact with the main surface of the filtering element 2.

More particularly, should the main surface 2a have a cylindrical conformation and be coincident with the inner surface of the filtering element, the scraping element too would consist of a cylindrical helix housed within the filtering element 2 (see figures). On the contrary, should the main surface 2a be coincident with the radially outer surface of the filtering element 2 for example, the scraping element would be a helix operating in the hollow space 7 and active externally of element 2.

Advantageously the helix-shaped bar 10 has a substantially square transverse section disposed in a manner adapted to cause abutment of two corners 10c and 10d of the scraping edge 10b against the cylindrical surface 2a.

The movement means 11, in addition to comprising a motor 13 and a shaft 14, is also provided with an attachment unit 15 which is integral with one drive end 10e of the helix-shaped bar 10 disposed uppermost. Unit 15 consists of a disc 15a and a counter-disc 15b adapted to sandwich and lock said drive end 10e therebetween.

In the helix-shaped bar 10, turns 10a have such a winding direction and the bar is moved according to such a rotation direction about the central axis 12 that displacements from top to bottom of the scraping edge 10b are caused. For instance if, as illustrated in the accompanying figures, the winding direction of turns 10a is to the left, the rotation direction of shaft 14 and helix-shaped bar 10 seen from the top is clockwise.

In addition, in order to compensate for possible misalignments of shaft 14 and helix-shaped bar 10 relative to the filtering element 2, and to enable a free flowing of the liquid into the filtering element without obstacles resulting from the presence of the attachment unit 15, the helix-shaped bar 10 has some turns, two or three turns close to the drive end 10 for example, disposed externally of the filtering element 2.

For the purpose of constantly ensuring a spring contact of the scraping edge 10b against the cylindrical surface 2a of the filtering element 2, the helix-shaped bar 10 in a working position, that is when it is set within the filtering element, has a preloading in a torsional direction originating a spring thrust towards the cylindrical surface itself 2a.

Finally, the helix-shaped bar 10 material, at least at the scraping edge 10b, has a surface hardness lower than that of the cylindrical surface 2a, so as to preserve the most expensive component, i.e. the filtering element 2, and therefore carry out replacement due to wear of the scraping element 10 alone.

Operation of the self-cleaning filter described above mainly as regards structure, is as follows.

The helix-shaped scraping element 10, by rotating about the central axis 12, simultaneously carries out both downward displacement of the solid deposits resting on the inner cylindrical surface 2a and removal of same from the filtering element slits by means of a component extending oblique to said slits, which component is adapted to cause a particularly efficient tear-detaching effect in the case of deposits of the filamentary type.

Movement of the scraping element 2 and opening of the underlying discharge valve can be arranged either at predetermined time intervals for given time lengths, or on reaching of a predetermined pressure difference between the inlet 4 and outlet 5 openings.

When important amounts of solids are suspended in the fluid to be filtered, the scraping element 10 can be maintained in permanent rotation and opening and closing of the discharge valve can be timed, so that a constant cleaning of the filtering element 2 can be maintained, which avoids variations in the loss of head.

Advantageously, an outer counter-washing unit, known per se, may be associated with the helix-shaped scraping element 10 carrying out internal cleaning, which unit is particularly appropriate to remove solids when they are jammed in the hollow spaces between the filtering bars, above all when compounds having a crystallizing effect are being retained such as soda ash, bicarbonates, carbonates and aggregating compounds, i.e. polyelectrolytes and coagulating agents. Counter washing is carried out by means of nozzles oriented tangentially of the outer surface of the filtering element and disposed at diametrically opposite positions to obtain a whirl effect. The motor and scraping element are set in rotation when counter-washing is performed, whereas the discharge valve may have a continuous or timed operation.

The invention achieves important advantages.

First of all, the helix conformation of the scraping element and engagement of said element with the movement means only at one end thereof enable a free passage to be obtained over the whole path of travel from the inlet opening of the filter to the inner surface of the filtering element, without any obstacle being disposed centrally and with reduction of the free filtering area only as much as strictly necessary. Therefore anomalous agglomerations and deposit retentions cannot occur along said path. The related loss of head is also greatly reduced.

The square-section conformation of the scraping element enables availability of two side-by-side scraping lines which will double the cleaning effect and increase efficiency of the filtering element above all in case of big amounts of filamentary deposits.

Use of spring steel for the scraping element, in opposition to the known art in which plastic material is employed, in addition to enabling operation at high temperatures too, in the range of 90-130°C for example, also allows the scraping element to be constantly and elastically kept into contact with the filtering element even after continuous and prolonged operations that may cause partial wear of the scraping element, which will reduce necessity for servicing interventions.

Finally, the helix-shaped scraping element is a component of reduced cost, which can be easily replaced and offers a limited friction against the filtering element, so that also consumption of the absorbed energy for movement of same is of a reduced amount.

## Claims

1. A self-cleaning filter, comprising:
- a filtering element of tubular form (2) having a main filtering surface (2a) intended to receive a fluid to be filtered therethrough;
- at least one scraping element (10) disposed internally of said filtering element (2) and comprising a scraping edge (10b) in contact with said surface (2a), characterized in that said scraping element (10) has a helical conformation the central axis (12) of which is substantially coincident with a longitudinal extension axis of the main surface itself (2a); and in that movement means (11) is provided which is adapted to set said scraping element (10) in rotation about said central axis (12).

2. A filter as claimed in claim 1, characterized in that said scraping element (10) is defined by a bar consisting of wound turns (10a) forming a cylindrical or conical helix.

3. A filter as claimed in claim 2, characterized in that said movement means (11) comprises an attachment unit (15) integral with one drive end (10e) of said helix-shaped bar.

4. A filter as claimed in claim 2, characterized in that said helix-shaped bar (10) has a polygonal, preferably square, transverse section, disposed in a manner adapted to cause abutment of two corners (10c, 10d) of said scraping edge (10b) against said main surface (2a) of said filtering element (2).

5. A filter as claimed in claim 3, characterized in that said drive end (10e) of said helix-shaped bar (10) is disposed uppermost.

6. A filter as claimed in claim 2, characterized in that in said helix-shaped bar (10) turns 10a have such a winding direction and the bar is moved according to such a rotation direction about said central axis (12) that displacements from top to bottom of said scraping edge (10b) are caused.

7. A filter as claimed in claim 5, characterized in that said helix-shaped bar (10) comprises at least one turn (10a) close to said drive end (10e) which is disposed externally of said filtering element (2).

8. A filter as claimed in claim 7, characterized in that said attachment unit (15) comprises a disc (15a) and a counter-disc (15b) adapted to sandwich and lock said drive end (10e) of the helix-shaped bar (10) therebetween.

9. A filter as claimed in claim 2, characterized in that said helix-shaped bar (10) is made of spring material.

10. A filter as claimed in claim 8, characterized in that said helix-shaped bar (10) in a working position within said filtering element (2) has a preloading in a torsional direction adapted to cause spring abutment of the helix-shaped bar itself (10) against said main surface (2a).

11. A filter as claimed in claim 1, characterized in that at least said scraping edge (10b) has a surface hardness lower than the surface hardness of said filtering element (2) at said inner cylindrical surface (2a).
